# EUROPÄISCHE PATENTANMELDUNG

(11) **EP 4 682 303 A1**
(43) Veröffentlichungstag der Anmeldung: **21.01.2026**
(21) Anmeldenummer: 25188128.0
(22) Anmeldetag: 08.07.2025
(51) Int. Cl.: D06F 39/02, D06F 95/00, F16K 11/074

(54) **DOSIEREINRICHTUNG**

(30) Priorität: 18.07.2024 DE 102024120420
(71) Anmelder: Herbert Saier GmbH, 79194 Gundelfingen (DE)
(72) Erfinder: Saier, Michael, 79117 Freiburg/Kappel (DE)
(74) Vertreter: Roche, von Westernhagen & Ehresmann

(57) **Zusammenfassung**

Die Erfindung betrifft unter anderem eine Dosiereinrichtung (10) zur Versorgung einer Mehrzahl von Zielgeräten (15a, 15b, 15c) mit einem oder mit mehreren Medien (12a, 12b), umfassend eine Mischverteileinrichtung (16) mit mehreren Einlässen (20a, 20b, 20c) und einem Auslass (21), die zwei relativ zueinander drehbare und insbesondere aufeinander zu gespannte Scheiben (17, 18) umfasst, die in unterschiedlichen Drehpositionen unterschiedliche Kommunikationswege zwischen jeweils einem der Einlässe und dem Auslass schalten, eine Steuerung (23), mit der ein Antrieb (22) der Mischverteileinrichtung (16) zur Bewerkstelligung einer Drehung der Scheiben (17, 18) relativ zueinander ansprechbar ist, und einen motorisch angetriebenen und von der Steuerung (23) ansprechbaren Kugelhahn (24) mit einem Einlass (25) und wenigstens zwei Auslässen (26a, 26b, 26c), wobei jeder Auslass des Kugelhahns mit einem Zielgerät (15a, 15b, 15c) verbunden ist, wobei der Auslass der Mischverteileinrichtung (16) mit dem Einlass (25) des Kugelhahns (24) über einen Fluidleitungsabschnitt (31d) verbunden ist, der von einer durch die Steuerung (23) ansprechbaren Pumpe (37) beaufschlagbar ist.

## Beschreibung

Die Erfindung betrifft eine Dosiereinrichtung nach Anspruch 1.

Dosiereinrichtungen zur Dosierung und Förderung von Medien zu unterschiedlichen Zielgeräten werden von der Anmelderin seit Jahrzehnten entwickelt und gefertigt.

In jüngerer Zeit hat die Anmelderin sogenannte Mischverteileinrichtungen entwickelt, die zwei relativ zueinander drehbare Scheiben umfassen. Die Mischverteileinrichtung kann mehrere Einlässe und einen Auslass aufweisen. Damit können einem Zielgerät, z. B. einer Waschmaschine, mehrere unterschiedliche Medien dosiert sukzessive zugeführt werden. Eine solche Mischverteileinrichtung ist beispielsweise in der WO 2013/075692 A1 der Anmelderin beschrieben.

Die Anmelderin hat auch ein Verfahren entwickelt, bei dem jedes Mal nach Zuführung eines Mediums eine Spülung der Fluidleitungsabschnitte in der Mischverteileinrichtung mit einem Spülmittel, vorzugsweise mit Wasser, erfolgt.

Mit der in der Bezug genommenen Patentanmeldung beschriebenen Dosiereinrichtung der Anmelderin können auch mehrere Zielgeräte mit Medien beschickt werden. Hierzu wird auf die Fig. 22 der WO 2013/075692 A1 verwiesen, die eine erste Mischverteilanordnung mit einer Mehrzahl von Einlässen und einem Auslass und eine in Reihe dazu geschaltete zweite Mischverteileinrichtung mit einem Einlass und mit mehreren Auslässen umfasst.

Ausgehend von dem beschriebenen Stand der Technik besteht die Aufgabe der Erfindung darin, eine Dosiereinrichtung anzugeben, die auch in besonderen Anwendungssituationen, z. B. wenn zwischen der Dosiereinrichtung und dem Zielgerät große Höhendifferenzen zu überwinden sind, einsetzbar ist.

Die Erfindung löst diese Aufgabe mit den Merkmalen des Anspruches 1.

Das Prinzip der Erfindung besteht im Wesentlichen darin, eine Dosiereinrichtung anzugeben, die eine Mischverteileinrichtung und einen motorisch angetriebenen Kugelhahn aufweist. Der Kugelhahn weist einen Einlass und mehrere Auslässe auf. Typischerweise umfassen Kugelhähne zwei Auslässe oder drei Auslässe.

Die Erfindung erlaubt damit einen Rückgriff auf herkömmliche, kommerziell erhältliche Bauelemente.

Ein Kugelhahn im Sinne der Erfindung umfasst insbesondere einen Ventilkörper, der im Wesentlichen kugelförmig ausgebildet ist oder kugelflächenhaft ausgebildete Abschnitte aufweist und der von dem motorischen Antrieb des Kugelhahns um eine Drehachse drehbar ist. Der Antrieb kann von der Steuerung angesprochen werden. In unterschiedlichen Drehpositionen des Ventilkörpers kann der Kugelhahn unterschiedliche Kommunikationswege schalten und den Einlass des Kugelhahns wahlweise mit einem Auslass der mehreren Auslässe verbinden.

Der erfindungsgemäß vorgesehene Kugelhahn ist insbesondere druckfest ausgebildet. Dies ist insbesondere eine einem Kugelhahn innewohnende Eigenschaft. Der Kugelhahn umfasst einen Ventilkörper, der im Wesentlichen kugelförmig ausgebildet ist und der in einem den Ventilkörper umgebenden Gehäuse angeordnet ist. Der Kugelhahn kann eine Drehposition des Ventilkörpers bereitstellen, in der der Ventilkörper einen Auslass des Kugelhahns gegenüber dem Einlass des Kugelhahns druckfest abdichtet.

Auch ist der Kugelhahn dazu ausgebildet, einen Auslass des Kugelhahns gegenüber jedem anderen Auslass des Kugelhahns abzudichten. Die Abdichtung erfolgt druckfest.

Die erfindungsgemäße Dosiereinrichtung kann beispielsweise in einem Kellerraum eines Gebäudes angeordnet und installiert werden und eines oder mehrere der Zielgeräte können z.B. in höher gelegenen Positionen, z.B. in oberen Stockwerken des Gebäudes, angeordnet sein. Es können also sehr große Höhendifferenzen zwischen der Dosiereinrichtung und dem Zielgerät bestehen. Die in den Fluidleitungsabschnitten zwischen der Dosiereinrichtung und den in den oberen Stockwerken befindlichen Zielgeräten enthaltenen Volumina an Flüssigkeit können aufgrund der großen Wassersäule einen hohen hydrostatischen Leitungsdruck verursachen. Dieser Leitungsdruck wird erfindungsgemäß von dem Kugelhahn aufgefangen. Der Kugelhahn hält den hydrostatischen Leitungsdruck von der Pumpe und von der Mischverteilereinrichtung fern.

Der Kugelhahn kann die Mischverteileinrichtung, die stromaufwärts des Kugelhahns angeordnet ist, und auch die Pumpe, die ebenfalls stromaufwärts des Kugelhahns angeordnet ist, vor diesen hohen Leitungsdrücken schützen.

Die Mischverteileinrichtung umfasst zwei relativ zueinander drehbare Scheiben, die insbesondere aufeinander zu gespannt sind. Die Mischverteileinrichtung umfasst insbesondere eine Spanneinrichtung. Diese ermöglicht insbesondere ein Einstellen der Anpresskraft der beiden Scheiben relativ zueinander, wie beispielsweise in der eingangs genannten Patentanmeldung der Anmelderin beschrieben, insbesondere zur Erzielung der erforderlichen Dichtigkeit zwischen der Ausgangsseite der Eingangsscheibe und der Eingangsseite der Ausgangsscheibe. Die Einstellung der Anpresskraft erlaubt, dass die beiden Scheiben zueinander gängig sind.

Ohne die erfindungsgemäß vorgesehene Bereitstellung eines Kugelhahns stromabwärts der Mischverteileinrichtung könnte ein in den Leitungen bestehender hoher Leitungsdruck auf die Mischverteileinrichtung und/ oder auf die Pumpe durchschlagen und dort für Undichtigkeiten oder Rückflüsse sorgen, und z.B. auch die Anpresskraft der beiden Scheiben aneinander überwinden. Damit können unbeabsichtigt Leckagen entstehen oder ungewünschte Kommunikationswege zwischen dem Zielgerät und den Einlässen der Mischverteileinrichtung, und damit ggf. auch den Behältnissen, in denen die unterschiedlichen Medien angeordnet sind, aufgebaut werden. Dies kann erfindungsgemäß sicher vermieden werden. Insbesondere wird erfindungsgemäß ein jeglicher Rücklauf von Medium und Spülmittel verhindert.

Die erfindungsgemäße Dosiereinrichtung ist eingangsseitig mit mindestens zwei Behältnissen verbunden, in denen mindestens ein Medium und ein Spülmittel, insbesondere Wasser, angeordnet sind. Das Spülmittelreservoir, z. B. ein Wasserreservoir, kann über eine Rohrtrenneinrichtung mit einem Hauswasseranschluss verbunden sein.

Erfindungsgemäß kann die Dosiereinrichtung eingangsseitig mit einer Vielzahl an Behältnissen verbunden sein, in denen mehrere unterschiedliche Medien angeordnet sind.

Die erfindungsgemäße Dosiereinrichtung lässt aufgrund der Anordnung einer Mischverteilereinrichtung insbesondere zu, dass eingangsseitig der Dosiereinrichtung eine sehr große Zahl an unterschiedlichen Behältnissen mit unterschiedlichen Medien angeschlossen wird, z.B. sieben Medien.

Von der Erfindung ist auch umfasst, wenn die Mischverteilereinrichtung kaskadenartig ausgebildet ist, und z.B. zwei Mischverteilereinrichtungen umfasst, die in Serie geschaltet sind. Damit kann die Zahl der eingangsseitig an die Dosiereinrichtung anzuschließenden Behältnisse mit unterschiedlichen Medien erhöht werden.

Die Mischverteileinrichtung kann eine Eingangsscheibe aufweisen, die mehrere Einlässe, z. B. drei, oder sieben Einlässe, aufweist und einen Auslass. Die Eingangsscheibe kann eine Ausgangsseite aufweisen, die mit einer Eingangsseite einer Ausgangsscheibe in Kontakt steht. Die Ausgangsscheibe der Mischverteileinrichtung umfasst auf ihrer Eingangsseite eine Mündung eines Durchgangskanals, der zu einem Auslass auf der Ausgangsseite der Ausgangsscheibe führt. Die beiden Scheiben können aus Keramik bestehen.

Die Scheiben sind insbesondere aufeinander zu gespannt, z. B. durch eine Spanneinrichtung, die z.B. eine Schraub- oder Federspannung generiert.

Die Mischverteileinrichtung umfasst einen Antrieb, insbesondere einen Elektromotor, der von einer Steuerung der Dosiereinrichtung angesprochen werden kann.

Die Steuerung kann nach Erhalt des Anforderungskommandos von dem Zielgerät den Antrieb der Mischverteilereinrichtung und auch den Antrieb des Kugelhahns ansprechen und die gewünschten Kommunikationswege zwischen einem der Einlässe der Mischverteilereinrichtung und dem Auslass der Mischverteilereinrichtung und zwischen dem Einlass des Kugelhahns und einen ausgewählten Auslass des Kugelhahns schalten. Damit wird der gewünschte Kommunikationsweg zwischen einem ausgewählten Medium und einem ausgewählten Zielgerät bereitgestellt.

Nachdem die Dosiereinrichtung die entsprechenden Kommunikationswege geschaltet hat, kann sie eine Pumpe ansprechen. Die Pumpe wirkt auf einen Fluidleitungsabschnitt ein, der zwischen dem Auslass der Mischverteileinrichtung und dem Einlass des Kugelhahns angeordnet ist.

Die Erfindung bezieht sich insbesondere auf eine Dosiereinrichtung die dazu ausgebildet ist, eine geringe Zahl an Zielgeräten, z.B. zwei bis drei Geräte, mit einer großen Zahl unterschiedlicher Medien zu versorgen, z.B. mit sieben unterschiedlichen Medien und einem Spülmedium.

Der Kugelhahn umfasst z.B. zwei Auslässe oder drei Auslässe und ist demzufolge mit zwei Zielgeräten oder drei Zielgeräten verbunden.

Von der Erfindung ist auch umfasst, wenn der Kugelhahn mehr als drei Auslässe aufweist.

Zur Vermeidung von Wiederholungen wird auf die nachfolgenden Druckschriften des Standes der Technik verwiesen, die auf die Anmelderin zurückgehen und die sämtlich Dosiereinrichtungen offenbaren: DE 10 2011 108 396 A1, DE 10 2011 119 021 A1, DE 10 2011 122 921 A1, DE 10 2012 012 913 A1, DE 10 2014 002 560 A1, DE 10 2014 010 126 A1, DE 10 2015 107 105 A1, DE 10 2015 107 976 A1, DE 10 2016 102 829 A1, DE 10 2017 103 168 B3, DE 10 2017 114 665 A1, DE 10 2017 114 767 A1, DE 10 2018 113 644 A1, DE 10 2018 122 651 A1, DE 10 2020 107 555 A1, DE 10 2020 107 558 A1, DE 10 2022 125 425 A1 und DE 10 2023 123 774 A1.

Der Inhalt dieser Schutzrechtsanmeldungen wird zur Vermeidung von Wiederholungen hiermit in den Inhalt der vorliegenden Patentanmeldung mit eingeschlossen, dies insbesondere auch zu dem Zweck, bei Bedarf Merkmale aus diesen Druckschriften in den Inhalt der vorliegenden Anmeldung, bei Bedarf auch in die Ansprüche der vorliegenden Anmeldung, mit aufzunehmen.

Ausführungsbeispiele der Dosiereinrichtung der vorliegenden Patentanmeldung können mit jeglichen Merkmalen der Dosiereinrichtungen der oben erwähnten Druckschriften des Standes der Technik, auch der eingangs erwähnten Druckschrift der Anmelderin, kombiniert werden. Jegliche dieser Kombinationen sind von Erfindung mit umfasst.

Gemäß einer vorteilhaften Ausgestaltung der Erfindung sind die Zielgeräte jeweils als Waschmaschinen ausgebildet. Dies ermöglicht eine zentrale Steuerung einer Mehrzahl von Waschmaschinen mit einer einzigen Dosiereinrichtung.

Gemäß einer vorteilhaften Ausgestaltung der Erfindung umfasst der Kugelhahn einen im Wesentlichen kugelförmigen Ventilkörper, der um eine Drehachse drehbar ist. Dies erlauft einen Rückgriff auf kommerziell erhältliche Kugelhähne.

Gemäß einer vorteilhaften Ausgestaltung der Erfindung umfasst der Ventilkörper wenigstens einen Durchgangskanal. Dieser kann z.B. nach Art eines 90 Grad Bogens, insbesondere gekrümmt, ausgebildet sein. Dies ermöglicht einen Rückgriff auf kommerziell erhältliche Kugelhähne. Der Ventilkörper kann auch mehrere Durchlasskanäle umfassen.

Gemäß einer vorteilhaften Ausgestaltung der Erfindung verbindet der Ventilkörper in einer ersten Drehposition den Einlass des Kugelhahns mit einem ersten Auslass des Kugelhahns und in einer zweiten Drehposition den Einlass des Kugelhahns mit einem zweiten Auslass des Kugelhahns. Dies ermöglicht einen Rückgriff auf kommerziell erhältliche Kugelhähne.

Gemäß einer weiteren vorteilhaften Ausgestaltung der Erfindung sperrt der Ventilkörper in einer dritten Drehposition den Auslass des Kugelhahns gegenüber dem Einlass des Kugelhahns druckfest ab. Dies sorgt dafür, dass die Mischverteileinrichtung, die stromaufwärts des Kugelhahns angeordnet ist, einem hohen Leitungsdruck, der stromabwärts des Kugelhahns auftritt, nicht ausgesetzt wird.

Weiter vorteilhaft kann der Ventilkörper in der dritten Drehposition einen Auslass des Kugelhahns zugleich auch gegenüber jedem anderen Auslass des Kugelhahns druckfest sperren.

Gemäß einer vorteilhaften Ausgestaltung der Erfindung umfasst der Kugelhahn einen Einlass und zwei Auslässe oder einen Einlass und drei Auslässe. Dies ermöglicht einen Rückgriff auf kommerziell erhältliche Kugelhähne.

Gemäß einer weiteren vorteilhaften Ausgestaltung der Erfindung ist einer der Einlässe der Mischverteileinrichtung mit einem Spülmittelreservoir, z. B. einem Wasserreservoir, verbunden. Dies ermöglicht ein Spülen der Fluidleitungsabschnitte jedes Mal nach der Förderung eines Mediums.

Weitere Vorteile der Erfindung ergeben sich aus den nicht zitierten Unteransprüchen sowie der nachfolgenden Beschreibung der in den Zeichnungen dargestellten Ausführungsbeispiele.

Darin zeigen:
- Fig. 1: in einer teilgeschnittenen, schematischen blockschaltbildartigen Ansicht ein erstes Ausführungsbeispiel einer erfindungsgemäßen Dosiereinrichtung, die eine Mischverteileinrichtung umfasst, an die eingangsseitig zwei Behältnisse und ein Spülmittelreservoir angeschlossen sind, und die einen Kugelhahn mit einem Einlass und drei Auslässen umfasst, an den ausgangsseitig drei Waschmaschinen angeschlossen sind,
- Fig. 2: in einer teilgeschnittenen, abgebrochenen, schematischen Ansicht etwa entlang Schnittlinie II-II in Fig. 1, ein Ausführungsbeispiel eines Kugelhahns und dessen Antrieb,
- Fig. 3: in einer teilgeschnittenen, schematischen Ansicht den Kugelhahn der Fig. 2, etwa entlang Schnittlinie III-III in Fig. 2,
- Fig. 4: den Kugelhahn der Fig. 3 in einer teilgeschnittenen, schematischen Ansicht etwa entlang Schnittlinie IV-IV in Fig. 3, mit einem in einer ersten Drehposition befindlichen Ventilkörper entsprechend der Darstellung der Figuren 1 bis 3,
- Fig. 5: den Kugelhahn der Fig. 4 mit einem in einer geänderten Drehposition befindlichen Ventilkörper,
- Fig. 6: den Kugelhahn der Fig. 4 mit einem in einer weiteren geänderten Drehposition befindlichen Ventilkörper, und
- Fig. 7: den Kugelhahn der Fig. 4 mit einem in einer weiteren geänderten Drehposition befindlichen Ventilkörper.

Die Ausführungsbeispiele der Erfindung werden anhand der nachfolgenden Beschreibung der Zeichnungen erläutert:
Ausführungsbeispiele der Erfindung sind in der nachfolgenden Figurenbeschreibung, auch unter Bezugnahme auf die Zeichnungen, beispielhaft beschrieben. Dabei werden der Übersichtlichkeit halber - auch soweit unterschiedliche Ausführungsbespiele betroffen sind - gleiche oder vergleichbare Teile oder Elemente oder Bereiche mit gleichen Bezugszeichen, teilweise unter Hinzufügung kleiner Buchstaben, bezeichnet.

Merkmale, die nur in Bezug zu einem Ausführungsbeispiel beschrieben sind, können im Rahmen der Erfindung auch bei jedem anderen Ausführungsbeispiel der Erfindung vorgesehen werden. Derartig geänderte Ausführungsbeispiele sind - auch wenn sie in den Zeichnungen nicht dargestellt sind - von der Erfindung mit umfasst.

Alle offenbarten Merkmale sind für sich erfindungswesentlich. In die Offenbarung der Anmeldung wird hiermit auch der Offenbarungsinhalt der zugehörigen Prioritätsunterlagen (Abschrift der Voranmeldung) sowie der zitierten Druckschriften und der beschriebenen Vorrichtungen des Standes der Technik vollinhaltlich mit einbezogen, auch zu dem Zweck, einzelne oder mehrere Merkmale dieser Unterlagen in einen oder in mehrere Ansprüche der vorliegenden Anmeldung mit aufzunehmen.

Ein Ausführungsbeispiel einer erfindungsgemäßen Dosiereinrichtung wird in den Zeichnungen in seiner Gesamtheit mit dem Bezugszeichen 10 bezeichnet.

Die erfindungsgemäße Dosiereinrichtung 10 umfasst eine Mischverteilereinrichtung 16 und einen Kugelhahn 24.

Eingangsseitig sind an die Dosiereinrichtung 10 zwei Behältnisse 11a, 11b angeschlossen, in denen jeweils ein Medium 12a, 12b angeordnet ist. Die Zahl der Behältnisse 11a, 11b und die Zahl der Medien 12a, 12b ist vom Fachmann frei wählbar.

An die Dosiereinrichtung 10 ist eingangsseitig zudem ein Spülmittelreservoir 13 angeschlossen, in dem sich Wasser 14 befindet. Die Dosiereinrichtung 10 kann die unterschiedlichen Medien 12a, 12b bzw. Wasser 14 dosiert zu einem ausgewählten Zielgerät 15a, 15b, 15c fördern.

Die Mischverteilerrichtung 16 umfasst eine Eingangsscheibe 17 und eine relativ dazu um eine Drehachse 19 drehbare Ausgangsscheibe 18.

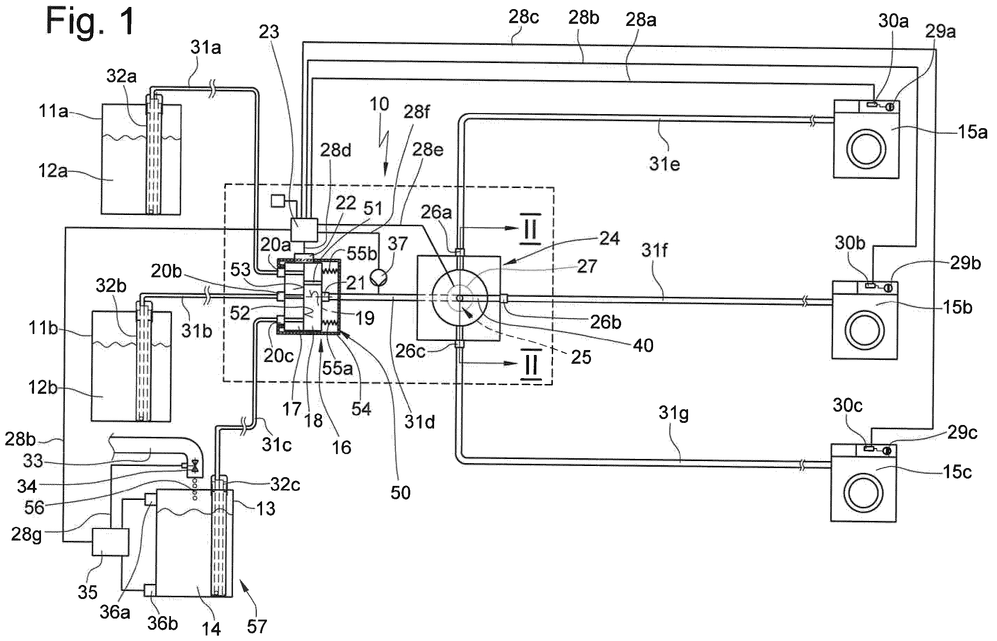

An der Mischverteilereinrichtung 16 sind eingangsseitig drei Einlässe 20a, 20b, 20c angeordnet. An der Ausgangsscheibe 18 ist ein Auslass 21 angeordnet. Der Auslass 21 der Mischverteilereinrichtung 16 ist über einen Fluidleitungsabschnitt 31d mit einem in Fig. 1 nicht erkennbaren, an der Unterseite eines Kugelhahns 24 angeordneten Einlass 25 des Kugelhahns 24 verbunden. Der Kugelhahn 24 umfasst drei Auslässe 26a, 26b, 26c.

Eine Entnahme der Medien 12a, 12b bzw. des Wassers 14 erfolgt unter Zuhilfenahme von Sauglanzen 32a, 32b, 32c über Fluidleitungen 31a, 31b, 31c, die das jeweilige Behältnis 11a, 11b, 13 mit der Dosiereinrichtung 10 verbinden. Der Kugelhahn 24 ist ausgangsseitig über Fluidleitungen 31e, 31f, 31g mit den Zielgeräten 15a, 15b, 15c verbunden.

Die Zielgeräte 15a, 15b, 15c sind bei dem Ausführungsbeispiel der Figur 1 sämtlich von Waschmaschinen gebildet.

An jedem der Zielgeräte 15a, 15b, 15c ist ein Programmwahlschalter 29a, 29b, 29c angeordnet, der mit einer Steuereinheit 30a, 30b, 30c des jeweiligen Zielgerätes 15a, 15b, 15c verbunden ist.

Die Mischverteilereinrichtung 16 umfasst einen Antrieb 22, der die beiden Scheiben 17, 18 in unterschiedliche relative Drehumfangspositionen verlagern und auf diese Weise Kommunikationswege zwischen einem der Einlässe 20a, 20b, 20c und dem Auslass 21 schalten kann. Der Antrieb 22 ist von der Steuerung 23 der Dosiereinrichtung 10 ansprechbar. Die Ausgangsscheibe 18 der Mischverteilereinrichtung 16 umfasst einen Durchgangskanal 51. Dieser wird in Folge einer Relativdrehung der beiden Scheiben 17, 18 bei Bedarf mit einem der Einlässe 20a, 20b, 20c in kommunikative Verbindung gebracht.

Die beiden Scheiben 17,18, sind aufeinander zugespannt, derart, dass die Ausgangsseite 52 der Eingangsscheibe 17 die Eingangsseite 53 der Ausgangsscheibe 18 mit einem vorherbestimmten Anpressdruck kontaktiert. Der Anpressdruck wird so eingestellt, dass eine Dichtigkeit der beiden Flächen 52, 53 zueinander erreicht wird, die Flächen aber noch gängig sind, und infolge einer relativen Drehbewegung die beiden Scheiben 17, 18 aneinander vorbeidrehen können.

Zur Einstellung des Anpressdruckes kann eine Spanneinrichtung 50 vorgesehen sein, die z.B. ein Gehäuse 54 umfassen kann, das die beiden Scheiben 17,18 einfasst. Weiter kann die Spanneinrichtung 50 Federn 55a, 55b umfassen, die sich am Gehäuse 54 abstützen können, um die beiden Scheiben 17, 18 gegeneinander vorzuspannen.

Die Mischverteilereinrichtung 16 kann insbesondere der in der WO 2013/075692 A1 offenbarten Mischverteilereinrichtung entsprechen. Von der Erfindung ist auch umfasst, wenn eine Spanneinrichtung 50 eine unmittelbare Schraubverspannung der beiden Schreiben 17,18 gegeneinander umfasst, und z.B. auch ohne ein gesondertes Gehäuse 54 auskommt.

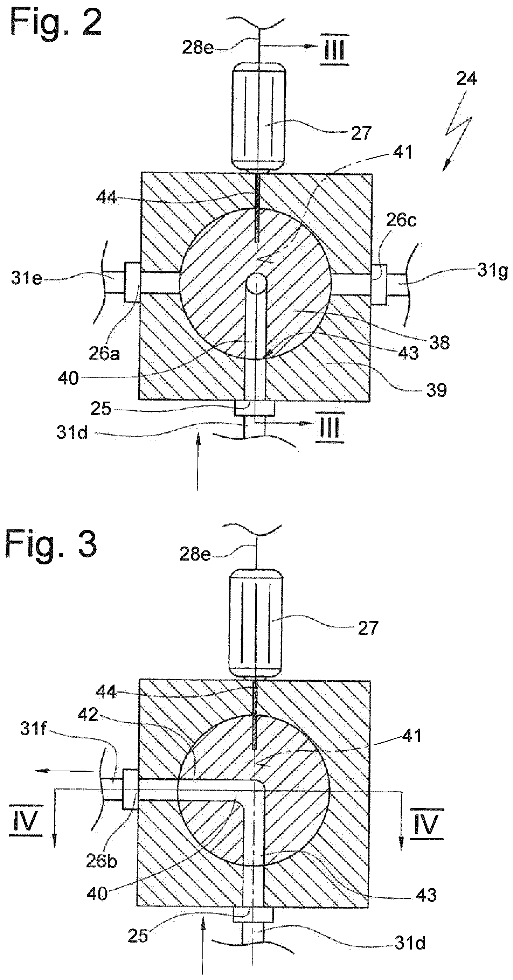

Der Kugelhahn 24 wird nachfolgend anhand der Figuren 2-7 erläutert:
Der Kugelhahn 24 umfasst einen Ventilkörper 38, der im Wesentlichen nach Art einer Kugel ausgebildet ist. Der Ventilkörper 38 ist an einem Gehäuse 39 angeordnet und von einem Antrieb 27 um eine Drehachse 41 drehbar.

Der Ventilkörper 38 umfasst einen Durchgangskanal 40, der gemäß Fig. 3 nach Art eines 90° Bogens ausgebildet ist.

Dem Kugelhahn 24 zugehörig ist ein Antrieb 27, der ebenfalls von der Steuerung 23 der Dosiereinrichtung 10 ansprechbar ist. Der Antrieb 27 umfasst eine Ausgangswelle 44, die drehfest mit dem Ventilkörper 38 verbunden ist. Die Ausgangswelle 44 weist eine Drehachse auf, mit der die Drehachse 41 des Ventilkörpers 38 zusammenfällt.

Der Durchgangskanal 40 umfasst zwei Enden 42 und 43.

Der Kugelhahn 24 umfasst gemäß den Figuren 1-7 einen Einlass 25, der, wie sich am besten aus den Figuren 2 und 3 in Zusammenschau ergibt, unmittelbar auf der geometrischen Drehachse 41 angeordnet ist bzw. von der Drehachse 41 des Ventilkörpers 38 durchquert wird.

In sämtlichen unterschiedlichen Drehpositionen des Ventilkörpers 38, die nachfolgend erläutert werden, ist der Durchgangskanal 40 mit seinem eingangsseitigen Ende 43 immer dem Einlass 25 gegenüberliegend angeordnet.

Das ausgangsseitige Ende 42 des Durchgangskanals 40 des Ventilkörpers 38 kann in unterschiedlichen Drehpositionen des Ventilkörpers 38 jeweils mit einem der drei Auslässe 26a, 26b, 26c in kommunikative Verbindung gebracht werden.

Die Figuren 2-4 zeigen eine Drehposition des Ventilkörpers 38, in der das ausgangsseitige Ende 42 des Durchgangskanals 40 mit dem Auslass 26b kommunikativ verbunden ist.

Diese Position des Ventilkörpers 38 wird der vorliegen Patentanmeldung als erste Drehposition 46 des Ventilkörpers 38 bezeichnet.

In dieser ersten Drehposition des Ventilkörpers 38 kann gemäß Figur 1 eine Förderung von Medium 12a, 12b oder von Wasser 14 zu dem Zielgerät 15b durchgeführt werden.

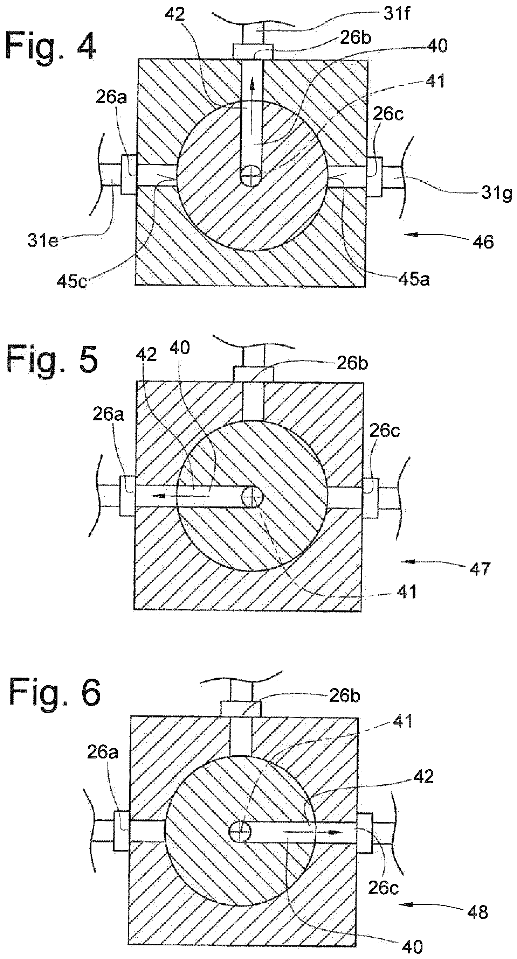

Figur 5 zeigt eine zweite Drehposition 47 des Ventilkörpers 38. Gegenüber der Position der Figur 4 ist der Ventilkörper 38 um 90° entgegen dem Uhrzeigersinn um die Drehachse 41 gedreht. Nun steht das ausgangsseitige Ende 42 des Durchgangskanals 40 in kommunikativer Verbindung mit dem ersten Auslass 26a.

In dieser zweiten Drehposition 47 des Ventilkörpers 38 kann, ausweislich Figur 1, eine Förderung von Medien 12a, 12b oder Wasser 14 zu dem Zielgerät 15a erfolgen.

In einer dritten Drehposition 48 des Ventilkörpers 38 gemäß Figur 6 steht das ausgangsseitige Ende 42 des Durchgangskanals 40 in kommunikativer Verbindung mit dem dritten Auslass 26c des Kugelhahns 24.

In dieser Drehposition des Ventilkörpers 38 kann eine Förderung von Medium 12a, 12b oder Wasser 14 zu dem dritten Zielgerät 15c hin erfolgen.

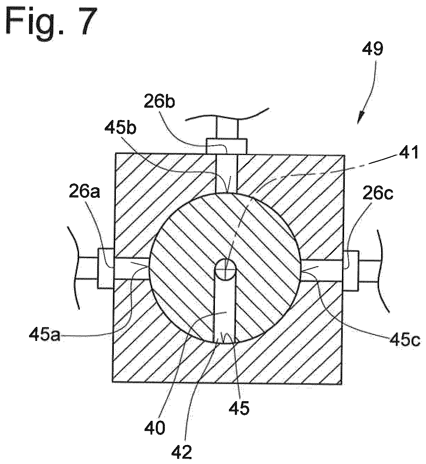

Figur 7 zeigt schließlich eine weitere Drehposition 49 des Ventilkörpers, die als Sperrposition bezeichnet wird. In der Sperrposition werden alle drei Auslässe 26a, 26b, 26c des Kugelhahns 24 durch entsprechende Dichtflächen 45a, 45b, 45c des Ventilkörpers 38 und unter Zuhilfenahme einer Dichtfläche 45d am Gehäuse 39 gegeneinander und ggü. dem Einlass 25 druckfest abgedichtet.

Das ausgangsseitige Ende 42 des Durchgangskanals 40 ist in der Drehposition 49 gemäß Figur 7 durch den Dichtflächenabschnitt 45 verschlossen.

Angemerkt sei, dass auch in den übrigen Drehpositionen des Ventilkörpers 38 eine druckfeste Abdichtung der ausgangsseitig des Kugelhahns 24 angeordneten Fluidleitungen 31e, 31f, 31g gegenüber der Pumpe 37 und gegenüber der Mischverteileinrichtung 16 erfolgt. So macht z.B. Figur 4 deutlich, dass eine Dichtfläche 45a an dem Ventilkörper 38 den Ausgang 26c des Kugelhahns 24 und eine Dichtfläche 45c den Ausgang 26a des Kugelhahns 24 abdichtet.

Die Besonderheit eines Kugelhahns 24 im Sinne einer druckfesten Abdichtung resultiert daraus, dass der Ventilkörper 38 nicht ausweichen kann und bei Druck, der auf einer Seite des Ventilkörpers 38 auftritt, eine Verlagerung des Ventilkörpers 38 in Richtung der Druckwirkung nicht zugelassen ist.

Die Dosiereinrichtung 10 verfügt über zahlreiche Signal- und Steuerleitungen, die mit dem Bezugszeichen 28 bezeichnet sind, insbesondere unter Hinzufügung kleiner Buchstaben.

So ist z.B. die Steuereinheit 30a des Zielgerätes 15a über eine Signalleitung 28a mit der Steuerung 23 der Dosiereinrichtung 10 verbunden. Das Steuergerät 30b des Zielgeräts 15b ist über eine Signalleitung 28b mit der Steuerung 23 und das Zielgerät 15c ist über eine Signalleitung 28c mit der Steuerung 23 verbunden.

Die Steuerung 23 ist über eine Signalleitung 28d mit dem Antrieb 22 der Mischverteilereinrichtung 16 verbunden.

Die Steuerung 23 ist auch über eine Signalleitung 28b gleichermaßen mit dem Antrieb 27 des Kugelhahns 24 verbunden.

Die Steuerung 23 ist darüber hinaus über eine Signalleitung 28f mit der Pumpe 37, z.B. einer Schlauchpumpe, verbunden.

Figur 1 zeigt, dass das Spülmittelreservoir 13 über eine Rohrtrenneinrichtung 57 mit einem Hauswasseranschluss 33 verbunden ist.

Die Steuereinheit 35 der Rohrtrenneinrichtung 57 ist mit einem öffen- und schließbaren Sperrschalter 34 des Hauswasseranschlusses 33 über eine Signalleitung 28g verbunden. Die Steuereinheit 35 der Rohrtrenneinrichtung 57 kann über eine Signalleitung 28h auch mit der Steuerung 23 der Dosiereinrichtung 10 verbunden sein.

Die Steuerung 23 kann z.B. über zwei oder mehr Niveaustandssensoren 36a, 36b verfügen.

Wenn der Vorrat an Wasser 14 in dem Spülmittelreservoir 13 zur Neige geht, kann dies durch einen Niveaustandssensor 36b von der Steuereinheit 35 detektiert werden. Die Steuereinheit 35 spricht daraufhin den Sperrschalter 34 an und lässt Wasser 14 über eine mit dem Bezugszeichen 56 bezeichnete Freifallstrecke in das Spülmittelreservoir 13. Sobald der obere Niveaustandssensor 36a ein ausreichendes Füllniveau feststellt, teilt er dies der Steuereinheit 35 mit. Diese betätigt sodann den Sperrschalter 34 und stoppt eine Wasserzufuhr.

Durch die Freifallstrecke 56 wird eine Kontamination des Hauswassernetzes sicher verhindert.

Die Funktionsweise der erfindungsgemäßen Dosiereinrichtung 10 erklärt sich wie folgt:
Nach Erhalt eines Anforderungskommandos für ein bestimmtes Volumen eines bestimmtes Mediums 12a von einem Zielgerät 15a initiiert die Steuerung 23 einen Dosierprozess.

Sie veranlasst hierzu ein Ansprechen des Antriebes 22 der Mischverteileinrichtung 16 und des Antriebs 27 des Kugelhahns 24 und eine Schaltung der Kommunikationswege zwischen dem Behältnis 11a mit dem angeforderten Medium (z.B. 12a) und dem Zielgerät 15a.

Sodann kann die Steuerung 23 die Pumpe 37 ansprechen und das angeforderte Volumen an Medium 12a aus dem Behältnis 11a entnehmen und zu dem Zielgerät 15a fördern.

Anschließend kann die Mischverteilerrichtung 16 den Durchlasskanal 51 in kommunikative Verbindung mit dem Spülmittelreservoir 13 bringen und die Leitungswege können infolge eines erneuten Ansprechens der Pumpe 37 mit Wasser gespült werden.

Nachfolgend kann das Zielgerät 15a ein anderes Medium, z.B. das Medium 12b, oder das gleiche Medium 12a, oder ein anderes Zielgerät 15b, 15c kann ein Medium 12a anfordern. Darauf veranlasst die Steuerung 23 wiederum eine Schaltung der entsprechenden Kommunikationswege.

Wenn kein weiteres Medium 12a oder Spülmedium 14 gefördert werden muss, kann die Steuerung 23 veranlassen, dass der Ventilkörper 38 des Kugelhahns 27 in eine Sperrposition gemäß Figur 7 verlagert wird, derart dass jegliche Leitungsdrücke stromabwärts des Kugelhahns 24 von der Pumpe 37 und von der Mischverteilereinrichtung 16 abgehalten werden.

Bei in Sperrposition 49 befindlichem Ventilkörper 38 gem. Fig. 7 besteht zwischen dem Einlass 25 des Kugelhahns 24 und den Auslässen 26a, 26b, 26c des Kugelhahns keinerlei kommunikative Verbindung.

Fig. 7 zeigt, dass in jeder Sperrposition eine druckfeste Abdichtung jedes Auslasses gegenüber dem Einlass 25 des Kugelhahns 24 aber zugleich auch gegenüber jedem anderen Auslass erreicht ist.

Der Kugelhahn 24 ist druckfest ausgebildet. Ein etwaiger, stromabwärts des Kugelhahns 27 auftretenden Leitungsdruck wird von dem Kugelhahn 24 von der Pumpe 37 und auch von der Mischverteilereinrichtung 16 fern gehalten.

Die Zielgeräte 15a, 15b, 15c können sich in einem Teil eines Gebäudes befinden, der weit oberhalb der Dosiereinrichtung 10 positioniert ist. Zwischen der Dosiereinrichtung 10 und dem Zielgerät 15a, 15b, 15c, können viele Meter, ggf. mehrere 10 m, Höhendifferenz bestehen.

Typischerweise weist ein erfindungsgemäß einzusetzender Kugelhahn 24 eine Druckfestigkeit von bis zu mehreren Bar, insbesondere von bis zu 10 Bar, auf.

Sowohl der Ventilkörper 38 als auch das Gehäuse 39 bestehen insbesondere aus einem chemiebeständigen Kunststoff. Sowohl das Gehäuse 39 als auch der Ventilkörper 38 sind insbesondere als Kunststoffspritzgussteile ausgebildet.

## Patentansprüche

1. Dosiereinrichtung (10) zur Versorgung einer Mehrzahl von Zielgeräten (15a, 15b, 15c) mit einem oder mit mehreren Medien (12a, 12b), umfassend eine Mischverteileinrichtung (16) mit mehreren Einlässen (20a, 20b, 20c) und einem Auslass (21), die zwei relativ zueinander drehbare und insbesondere aufeinander zu gespannte Scheiben (17, 18) umfasst, die in unterschiedlichen Drehpositionen unterschiedliche Kommunikationswege zwischen jeweils einem der Einlässe und dem Auslass schalten, eine Steuerung (23), mit der ein Antrieb (22) der Mischverteileinrichtung (16) zur Bewerkstelligung einer Drehung der Scheiben (17, 18) relativ zueinander ansprechbar ist, und einen motorisch angetriebenen und von der Steuerung (23) ansprechbaren Kugelhahn (24) mit einem Einlass (25) und wenigstens zwei Auslässen (26a, 26b, 26c), wobei jeder Auslass des Kugelhahns mit einem Zielgerät (15a, 15b, 15c) verbunden ist, wobei der Auslass der Mischverteileinrichtung (16) mit dem Einlass (25) des Kugelhahns (24) über einen Fluidleitungsabschnitt (31d) verbunden ist, der von einer durch die Steuerung (23) ansprechbaren Pumpe (37) beaufschlagbar ist.

2. Dosiereinrichtung (10) nach Anspruch 1, **dadurch gekennzeichnet, dass** die Zielgeräte (15a, 15b, 15c) jeweils als Waschmaschine ausgebildet sind.

3. Dosiereinrichtung (10) nach Anspruch 1 oder 2, **dadurch gekennzeichnet, dass** der Kugelhahn (24) einen im Wesentlichen kugelförmigen Ventilkörper (38) umfasst, der um eine Drehachse (41) drehbar ist.

4. Dosiereinrichtung (10) nach Anspruch 3, **dadurch gekennzeichnet, dass** der Ventilkörper (38) wenigstens einen Durchgangskanal (40) umfasst.

5. Dosiereinrichtung (10) nach einem der Ansprüche 3 bis 4, **dadurch gekennzeichnet, dass** der Ventilkörper (38) in einer ersten Drehposition (46) den Einlass des Kugelhahns mit einem ersten Auslass (26b) des Kugelhahns (24) und in einer zweiten Drehposition (47) den Einlass (25) des Kugelhahns (24) mit einem zweiten Auslass (26a) des Kugelhahns (24) verbindet.

6. Dosiereinrichtung (10) nach einem der Ansprüche 3 bis 5, **dadurch gekennzeichnet, dass** der Ventilkörper (38) in einer dritten Drehposition (49) wenigstens einen Auslass (26a, 26b, 26c) des Kugelhahns (24) gegenüber dem Einlass (25) des Kugelhahns (24) druckfest sperrt.

7. Dosiereinrichtung (10) nach einem der Ansprüche 3 bis 6, **dadurch gekennzeichnet, dass** der Ventilkörper (38) in einer Drehposition (49) den Auslass (26a) des Kugelhahns (24) gegenüber wenigstens einem anderen Auslass (26b, 26c) des Kugelhahns (24) druckfest sperrt.

8. Dosiereinrichtung (10) nach einem der vorangegangenen Ansprüche, **dadurch gekennzeichnet, dass** der Kugelhahn (24) einen Einlass (25) und zwei Auslässe (26a, 26b) umfasst.

9. Dosiereinrichtung (10) nach einem der Ansprüche 1 bis 7, **dadurch gekennzeichnet, dass** der Kugelhahn (24) einen Einlass (25) und drei Auslässe (26a, 26b, 26c) umfasst.

10. Dosiereinrichtung (10), nach einem der vorangegangenen Ansprüche, **dadurch gekennzeichnet, dass** einer der Einlässe (20a, 20b, 20c) der Mischverteileinrichtung (16) mit einem Spülmittelreservoir (13) verbunden ist.
